# EUROPÄISCHE PATENTSCHRIFT

(11) **EP 1 933 008 B1**
(45) Veröffentlichungstag und Bekanntmachung des Hinweises auf die Patenterteilung: **18.04.2018**
(21) Anmeldenummer: 06026083.3
(22) Anmeldetag: 15.12.2006
(51) Int. Cl.: F01D 21/00, F01D 21/06, H02H 3/04

(54) **Schutzsystem für eine Anlage sowie Verfahren zum Überprüfen eines Schutzsystems**
Safety system for a machine and method for monitoring a safety system
Système de protection pour une installation et procédé destiné à la surveillance d'un système de protection

(43) Veröffentlichungstag der Anmeldung: 18.06.2008
(73) Patentinhaber: Siemens Aktiengesellschaft, 80333 München (DE)
(72) Erfinder: Bröse, Jörg, 90427 Nürnberg (DE); Knörlein, Michael, 91080 Marloffstein (DE)

(56) Entgegenhaltungen:
- EP-A1- 1 308 803
- EP-A2- 0 573 186
- JP-A- 60 069 216
- JP-A- 60 219 403
- US-A- 3 662 219

## Beschreibung

Die Erfindung betrifft ein Schutzsystem gemäß dem Oberbegriff des Anspruchs 1.

Elektrische sowie elektronische Schutzsysteme für Anlagen sind allgemein bekannt. Beispielsweise offenbart die JP 60-069216 eine Sicherungsvorrichtung für eine Dampfturbine. Die Sicherungsvorrichtung erfasst drei Messwerte einer zu überwachenden Zustandgröße, beispielsweise die Rotordrehzahl. Liegt der mittlere Messwert dann oberhalb eines Grenzwertes, wird ein Steuersignal, beispielsweise ein Abschaltsignal, von der Sicherungsvorrichtung generiert.

Zudem ist aus der Offenlegungsschrift DE 33 09 431 A1 ein Schutzsystem für einen Turbosatz bekannt, deren Schnellschluss- oder Umleitungsventile mit elektrohydraulischen Stell- und Schaltantrieben ausgerüstet sind. Die Antriebe umfassen Mittel zum Empfang elektrischer Ansteuersignale, wodurch Ventile oder sonstige Stellorgane eines Turbosatzes betätigt werden. Die Ansteuersignale werden dabei, ggf. unter Zwischenschaltung eines Verstärkers, von einem Gerätesystem generiert, welches ein Teil des elektrischen Schutzsystems ist. Zur Erhöhung der Verfügbarkeit besteht das Gerätesystem aus zwei identischen speicherprogrammierbaren Zentraleinheiten mit jeweils einer Ein-/Ausgabeperipherie. Die Ein-/Ausgaben können je nach Anforderung einkanalig oder aus Redundanzgründen zweikanalig ausgeführt werden. Die beiden internen Bussysteme der Geräte werden ständig über fehlersichere Vergleicherbaugruppen auf Antivalenz überwacht. Bei Antivalenz liegt ein Systemfehler vor, der die Ansteuerung der Sicherheitsarmaturen der Anlage abschaltet, wodurch diese geschützt wird. Die Eingaben sind beim Betrieb des Turbosatzes erfasste Betriebsparameter, welche dabei in zwei Gruppenunterteilt werden können, einerseits in stark zeitkritische Schutzkriterien und andererseits in minder zeitkritische Schutzkriterien. Dabei ist für jedes dieser Schutzkriterien im Schutzsystem ein Schutzkreis vorgesehen.

Unter den stark zeitkritischen Schutzkriterien sind solche zu verstehen, die eine spontane sowie schnellstmögliche Reaktion, d.h. Abschaltung erfordern, sofern deren Messwerte außerhalb eines zulässigen Bereiches liegen. Zu diesen Kriterien zählen beispielsweise die Drehzahl des Turbosatzes, der Generator-Blockschutz und die Verdichterpumpüberwachung. Eine Reaktion sollte bei diesen genannten Kriterien innerhalb von maximal fünfzig Millisekunden nach dem Auftreten der Störung erfolgen. Mit anderen Worten: anlagengefährdende Betriebszustände sollen nach ihrem Auftreten von dem Schutzsystem erkannt und zuverlässig innerhalb von fünfzig Millisekunden zu einer vom Schutzsystem ausgelösten Schnellabschaltung der Anlage führen. Dieser Vorgang wird auch als Auslösung bezeichnet.

Minder zeitkritische Schutzkriterien umfassen Betriebsparameter, deren Störungen längere Reaktionszeiten zulassen. Beispiele für minder zeitkritische Schutzkriterien sind der Lageröldruck, der Turbinentemperaturschutz, die Lagerschwingung und die Lagertemperatur. Reaktionszeiten von deutlich größer als fünfzig Millisekunden sind hierbei akzeptabel.

Um die kurzen Reaktionszeiten von maximal fünfzig Millisekunden einzuhalten, kamen bisher als Gerätesysteme spezielle speicherprogrammierbare Automatisierungssysteme zu Einsatz. Diese verfügten über die Möglichkeit einer Interrupt-Bearbeitung von Signalen. Diese Interrupt-Bearbeitung wurde für stark zeitkritische Schutzkriterien, d.h. hochkritische Betriebsparameter der Anlage vorgesehen. Durch die Interrupt-Bearbeitung konnten die geforderten Reaktionszeiten sichergestellt werden, da die Signale der stark zeitkritischen Schutzkriterien hierdurch bevorzugt (priorisiert) von dem Automatisierungssystem bearbeitet werden konnte. Die endlos ausgeführten Befehle des intern gespeicherten Programmablaufs des Automatisierungssystems wurden also nach dem Auftreten eines Interrupt-Signals zeitnah unterbrochen. Folglich war eine Realisierung der stark zeitkritischen Turbinenschutzkreise mit einem derartigen Automatisierungssystem möglich, ohne dass weitere Steuerungskomponenten zwischen das Automatisierungssystem und den Stellorganen bzw. deren elektrische Ansteuerung zwischengeschaltet werden mussten.

Neuere, nun auf dem Markt befindliche Nachfolgesysteme von Automatisierungssystemen bieten mittlerweile keine Möglichkeit einer Interrupt-Bearbeitung von hochkritischen Betriebsparametern. Diese stark zeitkritischen Schutzkriterien können daher bei Verwendung eines derartigen Automatisierungssystems nicht mehr priorisiert von diesem abgearbeitet werden, sondern erst dann, wenn der intern gespeicherte Programmablauf im speicherprogrammierbaren Automatisierungssystem dies vorsieht. Bei Verwendung von interruptfreien Automatisierungssystemen können die geforderten Reaktionszeiten zum Schutz des Turbosatzes nun nicht mehr garantiert eingehalten werden, wodurch interruptfreie Automatisierungssysteme zur Anwendung in Schutzsystemen vorgenannter Art ungeeignet erscheinen.

Anstelle von der Verwendung von speicherprogrammierbaren fehlersicheren Automatisierungssystemen ist auch der Aufbau von fehlersicheren Schutzkreisen für stark zeitkritische und minder zeitkritische Schutzkriterien durch reine Relaisbaugruppen bekannt. Die Relaisbaugruppen sind elektrische Schaltungen, in denen eine Vielzahl von Relais zur Bildung des Schutzkreises miteinander verdraht sind. Diese Relaisbaugruppen erreichen zwar die geforderten Reaktionszeiten, weisen aber einen geringen Diagnoseaufdeckungsgrad auf. Darunter wird verstanden, dass in der Relaisbaugruppe bzw. in der Verschaltung der Relaisbaugruppe auftretende Fehler, wie z. B. Potentialschlüsse, nur unzureichend detektiert werden können. Aufgrund dieses geringen Diagnoseaufdeckungsgrades von Relaisbaugruppen müssen diese durch wiederkehrende, manuell durchzuführende Prüfungen auf Fehlerfreiheit überprüft werden. Das Prüfen obliegt üblicherweise dem Kraftwerksbetreiber des Turbosatzes, was zudem nur bei abgeschaltetem Turbosatz durchgeführt werden kann. Die wiederkehrenden manuellen Prüfungen stellen somit erhöhte Anforderungen an die Sorgfalt und Sachkenntnisse der Kraftwerksbetreiber dar, wobei die Auflagen zur wiederkehrenden Prüfung die schon ohnehin geringe Akzeptanz für die Verwendung von Relaisbaugruppen weiter verschlechtern. Gänzlich ungeprüfte Relaisbaugruppen haben darüber hinaus eine vergleichsweise hohe Versagenswahrscheinlichkeit, was im Anforderungsfall (der Schnellabschaltung) des Turbosatzes zu Maschinen- und Folgeschäden führen kann.

Aufgabe der vorliegenden Erfindung ist daher die Bereitstellung eines Schutzsystems für eine Anlage, welches unter Verwendung eines interruptlosen Automatisierungssystems über sehr kurze Reaktionszeiten zur Schnellabschaltung der Anlage verfügt, wobei das Schutzsystem besonders wartungsarm ausgebildet sein soll.

Die auf das Schutzsystem gerichtete Aufgabe wird durch ein Schutzsystem gemäß den Merkmalen des Anspruchs 1 gelöst.

Bei einem Schutzsystem der eingangs genannten Art ist eine Steuerrelaisschaltung mit mindestens einem Steuerrelais vorgesehen, über das die Betriebssignale weiterer Betriebsparameter zur Laststeuereinheit weiterleitbar sind, wobei die Steuerrelaisschaltung von dem Automatisierungssystem überprüfbar ist. Vorzugsweise handelt es sich bei den ersten Betriebsparametern um minder zeitkritische Schutzkriterien der Anlage und bei den weiteren Betriebsparametern um stark zeitkritische Schutzkriterien der Anlage.

Die Erfindung geht von der Erkenntnis aus, dass trotz der Verwendung eines interruptfreien Automatisierungssystems die geforderten, sehr kurzen Reaktionszeiten von kleiner fünfzig Millisekunden eingehalten werden können, wenn weitere Betriebsparameter, vorzugsweise die stark zeitkritischen Schutzkriterien, nicht über das Automatisierungssystem, sondern anstelle dessen über eine Steuerrelaisschaltung geführt werden, um darüber auf die Stellorgane der Anlage Einfluss nehmen zu können. Somit werden die Schutzkreise mit Reaktionszeitanforderungen von größer fünfzig Millisekunden über die Automatisierungssysteme geführt. Dies gilt folglich für die minder zeitkritischen Schutzkriterien. Für Schutzkreise mit Reaktionszeitanforderungen von kleiner fünfzig Millisekunden, also für die stark zeitkritischen Schutzkriterien, ist eine Steuerrelaisschaltung vorgesehen.

Ausschließlich für die stark zeitkritischen Schutzkriterien ist die Verwendung einer Steuerrelaisschaltung mit mindestens einem Steuerrelais sowie dessen elektrischer Verdrahtung als Schutzkreis vorgesehen. Die minder zeitkritischen Schutzkriterien werden von dem interruptfreien Automatisierungssystem erfasst und verarbeitet, da für diese eine schnellstmögliche Bearbeitung innerhalb von fünfzig Millisekunden nicht zwingend erforderlich ist. Weil aber die Steuerrelaisschaltung über keine immanente Diagnoseaufdeckung verfügt, ist das Automatisierungssystem fehlersicher ausgebildet und derart mit der Steuerrelaisschaltung verbunden, dass sowohl die Funktion der Steuerrelais als auch deren Verdrahtung vom Automatisierungssystem überprüfbar ist.

Anstelle einer manuellen Prüfung ist nun eine vom fehlersicheren Automatisierungssystem durchgeführte automatisierte Prüfung vorgesehen, welche kostengünstiger ist und mit geringerem Aufwand erfolgen kann. Die Prüfung kann dabei vom Automatisierungssystem auch zyklisch durchgeführt werden. Elektrische Fehler und Potentialschlüsse innerhalb der Steuerrelaisschaltung, welche zwischen den Prüfungen auftreten können, können so schneller ermittelt werden, wodurch unnötige Schnellauslösungen der Anlage bzw. potenzielles Schutzversagen vermieden werden können. Dies spart dem Betreiber einerseits Wartungskosten und andererseits die Kosten, welche durch eine unnötige Schnellabschaltung entstehen würden.

Insgesamt führt die Sicherstellung der fehlerfreien Verfügbarkeit der Relaisschaltung zu einer zeitnahen Erkennung und Meldung von Fehlern, wodurch ein sicherer Betrieb der Anlage gewährleistet werden kann. Sofern Fehler auftreten, können sie durch Verwendung des erfindungsgemäßen Schutzsystems und durch Durchführung des Prüfverfahrens rechtzeitig erkannt und durch angemessene Maßnahmen behoben werden.

Vorteilhafte Ausgestaltungen sind in den Unteransprüchen angegeben.

Um eine einheitliche Ansteuerung der Laststeuereinheiten von Betriebssignalen stark zeitkritischer und minder zeitkritischer Schutzkriterien zu erreichen, erfolgt die Kopplung zwischen den Signalausgängen des Automatisierungssystems und der Laststeuereinheit mittelbar über die Steuerrelaisschaltung, welche hierfür weitere Steuerrelais aufweist.

Bevorzugterweise ist zur Bildung einer Verfügbarkeitsredundanz ein Paar von getrennt ansteuerbaren Laststeuereinheiten mit jeweils einer Auslöselinie vorgesehen, welches die Auslöselinien nach Art einer ODER-Verknüpfung mit dem Stellglied verknüpft. Hierzu werden die Signale der jeweiligen Schutzkreise über separate Signalketten zu jeweils einer der beiden Laststeuereinheiten geführt. Bei einem ungestörten Betrieb der Anlage werden Spannungssignale bzw. Stromsignale an den Eingängen der jeweiligen Laststeuereinheit anstehen, gemäß dem Prinzip des Ruhestroms. Die Anlage wird nur dann automatisch abgeschaltet, wenn beide Auslöselinien wegen eines gestörten Betriebszustandes angesprochen haben, was jeweils zu einem Signal "spannungsfrei" bzw. "stromfrei" an einem der Eingänge der jeweiligen Laststeuereinheit führt, wonach das Stellglied zur Abschaltung der Anlage spannungsfrei geschaltet wird. Sofern nur eine der beiden Auslöselinien angesprochen hat, deutet dies auf einen Fehler in einer der Signalketten hin. Durch die Verwendung eines derartigen Aufbaus des Schutzkreises können Fehlauslösungen vermieden werden.

Vorzugsweise umfasst die Steuerrelaisschaltung zumindest eine Ruhestromlinie als Teil der Signalkette, in der ein oder mehrere Schaltelemente von den Steuerrelais der Steuerrelaisschaltung vorgesehen sind und welche Ruhestromlinie mit einem Eingang der Laststeuereinheit verbunden ist. Die nach dem Ruhestromprinzip arbeitende Ruhestromlinie ermöglicht prinzipiell die Reihenschaltung von stark zeitkritisch und minder zeitkritisch zu überwachenden Betriebsparametern. Durch die Verwendung des Ruhestromprinzips werden die zu überwachenden Betriebsparameter aktiv überwacht. Passive elektrische bzw. elektromechanische Fehler können in der Ruhestromlinie sofort beim Auftreten erkannt werden, was unentdeckte Fehler vermeidet.

In besonders bevorzugter Weise weist zur Bildung einer Sicherheitsredundanz jede Laststeuereinheit eingangsseitig zwei getrennte Ruhestromlinien auf, welche nach Art einer UND-Verknüpfung in der Laststeuereinheit verknüpft sind. Mit einer solchen Ausgestaltung wird die Sicherheit der Steuerrelaisschaltung wesentlich erhöht, da lediglich eine der beiden Ruhestromlinien einen gestörten Betrieb der Anlage anzeigen muss, um über die nachgeschaltete Laststeuereinheit die zugeordnete Auslöselinie spannungsfrei zu schalten.

Sofern das Schutzsystem zwei Auslöselinien mit je zwei Ruhestromlinien umfasst, ist ein einfehlertolerantes Schutzsystem geschaffen worden. Ein Fehler innerhalb der Ruhestromlinien führt weder zum Versagen des Schutzsystems noch zu einem fehlerhaften Ansprechen der Schutzfunktion. Zudem ist die Überprüfung der Ruhestromlinien und der nachgeschalteten Laststeuereinheit auf Fehler während des Betriebs der Anlage möglich.

Gemäß einer weiteren positiven Ausgestaltung weist die Steuerrelaisschaltung pro zu überwachendem Betriebssignal und pro Ruhestromlinie jeweils ein Steuerrelais auf, welches jeweils einen Erregereingang und mindestens ein Schaltelement umfasst, wobei der Erregereingang mit dem zum jeweiligen Betriebssignal zugehörigen Signalausgang des Automatisierungssystems verbunden und eines seiner Schaltelemente in der Ruhestromlinie vorgesehen ist.

Es ist von besonderem Vorteil, wenn für jede Ruhestromlinie ein Längsrelais mit einem Erregereingang und mit mindestens einem Schaltelement vorgesehen ist. Das Schaltelement ist in der jeweiligen Ruhestromlinie vorgesehen und der Erregereingang ist mit einem Signalausgang des Automatisierungssystems verbunden, um ein vom Automatisierungssystem vorgebbares Prüfsignal der Ruhestromlinie zuzuführen. Aufgrund dieser Ausgestaltung ist es möglich, jede Ruhestromlinie einzeln und zeitlich nacheinander mit einem Prüfsignal zu beaufschlagen, welches durch das Öffnen des in der Ruhestromlinie liegenden Schaltelements erzeugt wird. Dabei ist es vorgesehen, dass das Schaltelement des Längsrelais innerhalb der Ruhestromlinie einspeiseseitig angeordnet ist, also zwischen einer Einspeisung und den Schaltelementen weiterer Steuerrelais. Mit einer derartigen Anordnung wird erreicht, dass der gesamte Strompfad der Ruhestromlinie - von der Einspeisung bis zur Laststeuereinheit - überprüfbar ist. Der Strompfad wird dabei von der Verdrahtung und von den Schaltelementen der Steuerrelais gebildet.

In einer bevorzugten Ausgestaltung ist zur Rückführung des Prüfsignals zu dem Automatisierungssystem derjenige Leitungsabschnitt der betreffenden Ruhestromlinie mit einem Signaleingang des Automatisierungssystems verbunden, welcher mit dem Eingang der Laststeuereinheit unmittelbar verbunden ist. Folglich wird das von der Ruhestromlinie abgegriffene Prüfsignal so einspeisefern wie möglich vom Automatisierungssystem erfasst, um die zwischen der Einspeisestelle des Prüfsignals und diesem Abzweig liegenden Schaltelemente sowie deren Verdrahtung überprüfen zu können. Folglich kann der Zustand der betrachteten Ruhestromlinie insgesamt vom Automatisierungssystem überwacht werden.

In einer weiteren vorteilhaften Ausgestaltung ist zur Signalrückführung zu dem Automatisierungssystem die betreffende Auslöselinie mit einem Signaleingang des Automatisierungssystems verbunden. Insbesondere kann somit das Prüfsignal zurückgeführt werden. Da mit dem Prüfsignal auch die Laststeuereinheit angesteuert wird, kann deren Funktionsfähigkeit mit Hilfe des Prüfsignals auch überprüft werden. Hierzu ist lediglich die Auslöselinie mit einem der Signaleingänge des Automatisierungssystems zu verbinden, um das darüber an das Stellglied übermittelte (Prüf-)Signal, dem Automatisierungssystem zur Auswertung bereitzustellen.

Um bei sehr kurzen Auslösesignalen mit den Auslöselinien eine gesicherte und nachhaltige Abschaltung der Laststeuereinheiten zu gewährleisten und die mögliche Verzögerung von Signalen verschiedener Ruhestromlinien durch unterschiedliche Laufzeiten innerhalb des Automatisierungssystems und innerhalb der Steuerrelaisschaltung auszugleichen und zu synchronisieren, ist in jeder Ruhestromlinie jeweils ein auf der Auslösespeicher vorgesehen. Dieses ist vorzugsweise zwischen den Schaltelementen der Steuerrelais und der Laststeuereinheit angeordnet. Die in der Ruhestromlinie geführten Signale werden von dem Auslösespeicher zwischengespeichert, insbesondere das Signal "stromlos", um beim bestimmungsgemäßen Betrieb des Schutzsystems auch nur geringfügig zeitlich versetzte Abschaltimpulse zur Entscheidung über die Auslösung einer Schnellabschaltung der Anlage heranziehen zu können.

Da auch nach der Generierung eines Prüfsignals der Auslösespeicher seinen Zustand wechselt, sollte der Auslösespeicher auch durch ein Rücksetzsignal des Automatisierungssystems zurücksetzbar sein. Eine manuelle Quittierung des Prüfsignals ist dann nicht mehr erforderlich.

Für den unwahrscheinlichen Fall einer vorschriftsmäßigen Auslösung des Schutzsystems während der Überprüfungsphase ist es von besonderem Vorteil, wenn die selbsttätige Rücksetzung des Auslösespeichers dann blockiert wird. Eine automatische Quittierung einer vorschriftsmäßigen Abschaltung der Anlage wird somit sicher vermieden. Hierzu sind im Schutzsystem Auslöseerkennungsrelais und Rücksetzfreigaberelais vorgesehen, welche im vorgenannten Fall die Rücksetzung des Auslösespeichers blockieren. Bei einem verfügbarkeitsredundanten Schutzsystem sind diese Relais eingangsseitig mit denjenigen Ruhestromlinien verbunden, welche der dem Auslösespeicher nachgeordneten Laststeuereinheit nicht zugeordnet sind. Über eine dieser Ruhestromlinien wird nämlich das vorschriftsmäßige Abschaltsignal zu derjenigen Laststeuereinheit geführt, über welche das Stellglied noch vor der Auslösung mit der Versorgungsspannung verbunden war. Ein Fehlen des Ruhestroms auf einer dieser Ruhestromlinien zeigt daher die vorschriftsmäßige Auslösung an, was gleichzeitig zur Blockierung der selbsttätigen Rücksetzung des Auslösespeichers genutzt wird.

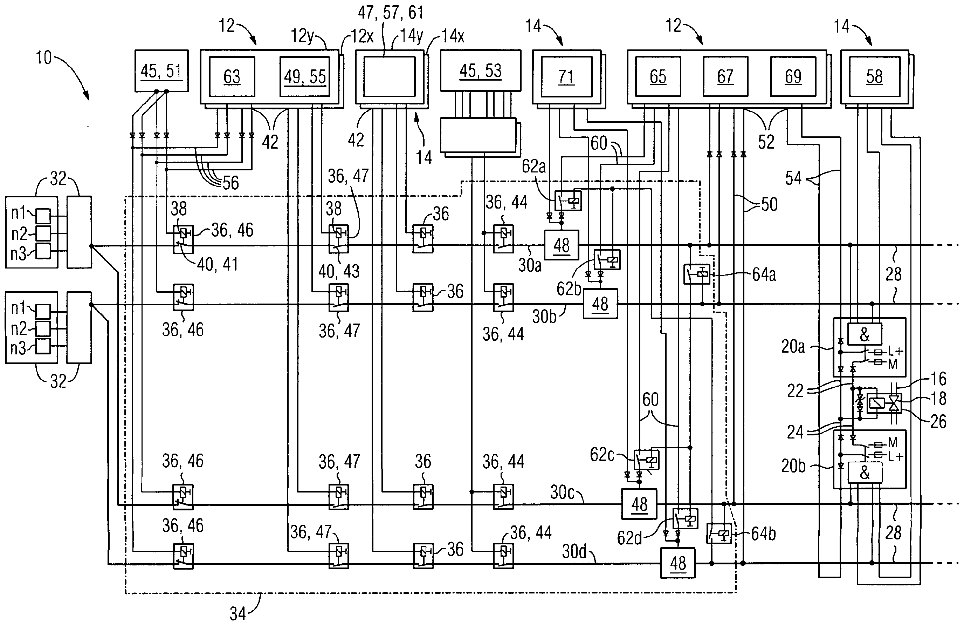

Ein bevorzugtes Ausführungsbeispiel der Erfindung ist in der Zeichnung dargestellt und wird in der nachfolgenden Beschreibung näher erläutert.

Es zeigt die einzige Figur eine schematische Schaltung eines fehlersicheren und hochverfügbaren Schutzsystems für eine Anlage.

Die einzige Figur zeigt den teilweise schematischen Schaltplan eines elektrischen Schutzsystems 10 für eine nicht dargestellte Anlage. Die Anlage kann beispielsweise ein Turbosatz oder eine Gasturbinenanlage sein. Nachfolgend wird das Schutzsystem einer Gasturbinenanlage beschrieben.

Die allgemeine Aufgabe des Schutzsystems ist es, während des Betriebes der Gasturbinenanlage Betriebsparameter zu erfassen und bei Vorliegen eines möglicherweise schadenbringenden Betriebszustandes die Gasturbinenanlage schnellstmöglich abzuschalten. Diese schnellstmögliche und ungeplante Abschaltung wird allgemein auch als Schnellschluss bezeichnet oder auch als Trip.

Das Schutzsystem 10 muss dabei zwei zum Teil konträre Forderungen möglichst optimal erfüllen. Einerseits ist eine hohe Auslösesicherheit, d. h. ein ordnungsgemäßes Abschalten der Gasturbinenanlage im Störungsfall gefordert, andererseits soll das elektrische Schutzsystem 10 eine hohe Verfügbarkeit aufweisen, um unnötige Fehlauslösungen und Fehlabschaltungen zu vermeiden.

Das Schutzsystem 10 umfasst zwei Automatisierungssysteme 12, 14, die jeweils in mehreren Funktionsblöcken verteilt dargestellt sind. Das Automatisierungssystem 12 ist ein fehlersicheres Automatisierungssystem 12 ohne die Möglichkeit einer Interruptbearbeitung und für die minder zeitkritischen, aber fehlersicheren Schutzkriterien vorgesehen. Das Automatisierungssystem 14 kann dagegen ein nicht fehlersicheres Automatisierungssystem 14 sein, da von diesem Signale von lediglich minder zeitkritischen Schutzkriterien nicht fehlersicher verarbeitet werden.

Aus Gründen der Sicherheit umfasst jedes Automatisierungssystem 12, 14 zwei redundant ausgelegte Automatisierungseinrichtungen, zu deren Unterscheidung die Bezugszeichen der Automatisierungssysteme 12, 14 jeweils mit dem Suffix "x" und "y" versehen sind.

Die Abschaltung der Gasturbinenanlage erfolgt durch die Schließung von mindestens einem Ventil 18, welches in einer Brennstoffleitung 16 angeordnet ist. Die Brennstoffzufuhr kann so unterbrochen werden, sofern das Ventil in der Gesamtzuführleitung vorgesehen ist. Üblicherweise weisen die Gasturbinenanlagen jedoch für jeden Brenner eine separate Brennstoffleitung 16 auf, so dass in jeder Brennstoffleitung 16 jeweils ein Ventil 18 zwischengeschaltet ist. Für eine Abschaltung der Gasturbinenanlage sind dann alle Ventile 18 zu schließen. Aus Gründen der Klarheit ist in der einzigen Figur jedoch lediglich eines der Ventile 18 gezeigt.

Das Ventil 18 und seine elektrische Ansteuerung stellen ein Stellglied 26 für das Schutzsystem dar, welches durch eine Laststeuereinheit 20 angesteuert werden kann. In der vorgesehenen Ausführungsform ist die Laststeuereinheit 20 als fehlersicherer Ventil-Schaltverstärker ausgebildet.

Zur Bildung einer Verfügbarkeitsredundanz ist für jedes Ventil 18 ein Paar von getrennt ansteuerbaren Laststeuereinheiten 20a, 20b vorgesehen. Zur Unterscheidung der einzelnen Laststeuereinheiten 20 des gezeigten Paares weisen die Bezugszeichen 20 die Suffixe "a" und "b" auf. Sofern nicht auf eine explizite Laststeuereinheit Bezug genommen wird, werden diese lediglich mit 20 bezeichnet.

Die Laststeuereinheit 20a ist ausgangsseitig über eine Auslöselinie 22 und die Laststeuereinheit 20b ist über eine Auslöselinie 24 mit dem Stellglied 26 verbunden. Die beiden Laststeuereinheiten 20 sind dabei nach Art einer ODER-Verknüpfung mit dem Stellglied 26 verbunden. So lange zumindest einer der beiden Laststeuereinheiten 20a (oder 20b) über eine der Auslöselinien 22 (oder 24) eine Versorgungsspannung dem Stellglied 26 zuschaltet, verbleibt das Ventil 18 in geöffneter Position, was den Betrieb der Gasturbinenanlage aufrechterhält. Zum Abschalten der Gasturbinenanlage müssen beide Laststeuereinheiten 20a und 20b des Paares die Spannungsversorgung vom Stellglied 26 trennen.

Jede der beiden Laststeuereinheiten 20a, 20b des Paares ist eingangsseitig unter anderem mit einem Ausgang 28 einer Ruhestromlinie 30 verbunden. Zur Bildung einer Sicherheitsredundanz sind jedoch, wie dargestellt, für jede Laststeuereinheit 20 des Paares zwei Ruhestromlinien 30 vorgesehen, welche nach Art einer UND-Verknüpfung in jeder Laststeuereinheit 20a und 20b verknüpft sind. Insgesamt sind somit vier Ruhestromlinien 30 vorgesehen, deren Bezugzeichen zur Unterscheidung die Suffixe "a", "b", "c" oder "d" aufweisen.

Unabhängig davon, wie viele Stellglieder 26 bzw. Ventile 18 die Anlage umfasst, sind vier Ruhestromlinien 30 vorgesehen. Sollte beispielsweise die Gasturbinenanlage Vierzehn Brenner mit jeweils einer separaten Brennstoffleitung 16 umfassen, in der jeweils ein Ventil 18 als Stellglied 26 vorgesehen ist, so ist für jedes Stellglied 26 ein weiteres Paar von Laststeuereinheiten 20a und 20b vorgesehen. Dann sind insgesamt zwei Mal vierzehn parallel geschaltete Laststeuereinheiten 20a (oder 20b) eingangsseitig mit den jeweils zwei Ruhestromlinien 30a, 30b (bzw. 30c, 30d) der vier Ruhestromlinien 30 verbunden.

Jede Ruhestromlinie 30 ist eingangsseitig mit einem Überdrehzahlschutzsystem 32 verbunden, welches aus Sicherheitsgründen ebenfalls redundant, also zweifach, vorhanden ist. Die Überdrehzahlschutzsysteme 32 speisen dabei in die nach dem Prinzip des Ruhestromes arbeitenden Ruhestromlinien 30 eine elektrische Spannung bzw. einen elektrischem Strom ein.

Jede Ruhestromlinie 30 stellt einen Teil einer Steuerrelaisschaltung 34 dar, die weiterhin mehrere fehlersichere Steuerrelais 36 umfasst. Die Steuerrelais 36 weisen dabei jeweils einen Erregereingang 38 und elektromagnetisch betätigbare Schaltelemente 40 wie Öffner 41 oder Schließer 43 auf, welche in den Ruhestromlinien 30 angeordnet sind. Innerhalb jeder Ruhestromlinie 30 sind die Schaltelemente 40 von stark zeitkritischen Schutzkreisen 45 und minder zeitkritischen Schutzkreisen 49 in Reihe verschaltet, wobei sich aufgrund der sicherheitsredundanten und verfügbarkeitsredundanten Struktur des Schutzsystems 10 eine matrixartige Anordnung der Steuerrelais 36 ergibt. Der Erregereingang 38 der Steuerrelais 36 ist mit einem der Signalausgänge 42 des Automatisierungssystems 12 oder 14 verbunden, welches somit die auf den betreffenden Ruhestromlinien 30 geführten Signale beeinflussen kann.

Für jede Ruhestromlinie 30 ist zwischen dem Einspeisepunkt am Überdrehzahlschutzsystem 32 und den Schaltelementen 40 der Steuerrelais 36 jeweils das als Öffner 41 ausgebildete Schaltelement 40 eines Längsrelais 46 vorgesehen. Die Längsrelais 46 dienen hauptsächlich als Sicherheitselemente eines so genannten Blockschutz-Schutzkreises 51, welcher nach dem Arbeitsstromprinzip funktioniert.

In jeder Ruhestromlinie 30 ist einen separater Auslösespeicher 48 vorgesehen, welcher zwischen dem Ausgang 28 der Ruhestromlinie 30 und den zur Ruhestromlinie zugehörigen Schaltelementen 40 angeordnet ist. Der Ausgang der Auslösespeicher 48 stellt den Ausgang 28 der Ruhestromlinie 30 dar und ist mit den Eingängen der Laststeuereinheiten 20 verbunden. Die Auslösespeicher 48 speichern die von ihnen eingangsseitig erfassten Signale bis zum Empfang eines Rücksetz- bzw. Quittierungssignals zwischen.

Die Automatisierungssysteme 12, 14 umfassen mehrere, nicht explizit dargestellte Signaleingänge, welche teilweise zum Empfang von Signalen von zu überwachenden Betriebsparametern der Anlage vorgesehen sind. Über die Signalausgänge 42 können die Automatisierungssysteme 12, 14 die Gasturbinenanlage mittelbar steuern. Die mittelbare Steuerung erfolgt dabei über die nachgeordnete Steuerrelaisschaltung 34, deren Ruhestromlinien 30 und über die Laststeuereinheiten 20.

Um die geforderten Reaktionszeiten von kleiner fünfzig Millisekunden für stark zeitkritische Schutzkriterien zu erreichen, wirken die Signale dieser Betriebsparameter unmittelbar auf die Ruhestromlinien über dafür vorgesehene Steuerrelais 44 ein, wobei dieses auch nach dem Ruhestromprinzip erfolgt. Dies ist exemplarisch für den Schutzkreis 53 des stark zeitkritischen Schutzkriteriums "Verdichterpumpschutz" dargestellt. Mit anderen Worten: die Signale der Betriebsparameter von stark zeitkritischen Schutzkriterien werden nicht über die Automatisierungssysteme 12, 14 geführt. Neben dem Verdichterpumpschutz 53 können weitere, hier nicht genannte stark zeitkritische Schutzkriterien in gleichartiger Art und Weise in der Steuerrelaisschaltung 34 des Schutzsystems 10 aufgenommen sein.

Bei im Betrieb befindlicher Gasturbinenanlage fließt im ungestörten Betriebszustand ein elektrischer Strom auf der Ruhestromlinie 30 bzw. steht eine elektrische Spannung auf der Ruhestromlinie 30 an. Eine Unterbrechung der Ruhestromlinie 30 kann auf einen Defekt der Ruhestromlinie 30 hindeuten. Die Unterbrechung des Stromflusses kann beispielsweise durch das Automatisierungssystem 12, 14 hervorgerufen werden, sofern die mit Schließern 43 ausgestatteten Steuerrelais 36 von einem der Automatisierungssysteme 12, 14 in den Zustand erregungslos geschaltet werden.

Insgesamt stellt die gezeigte Schaltung eine einfehlertolerante, hochverfügbare Schnellschluss-Auslösekette als Schutzsystem 10 für eine Gasturbinenanlage dar, welche wie folgt arbeitet: So lange mindestens eine der Laststeuereinheiten 20a oder 20b ausgangsseitig das Stellglied 26 mit Spannung versorgt, kann die Anlage weiter betrieben werden. Um bei einer Betriebsstörung die Spannungsversorgung des Stellgliedes 26 über die der Laststeuereinheiten 20a und 20b insgesamt abzuschalten, müssen mindestens zwei Ruhestromlinien 30a (oder 30b) und 30c (oder 30d) ausgangsseitig spannungsfrei sein.

Hierzu ist erforderlich, dass die im störungsfreien, fehlerfreien Zustand spannungsführende Ruhestromlinien 30a (oder 30b) und 30c (oder 30d) der Steuerrelaisschaltung 34 unterbrochen wird. Dazu sind die Schaltelemente 40 der Steuerrelais 36 in den Ruhestromlinien 30 eingebunden. Sofern ein Öffner 41 als Schaltelement 40 in der Ruhestromlinie 30 eingebunden ist, muss das Steuerrelais 36 betätigt werden um die Stromzufuhr in der Ruhestromlinie 30 zu unterbrechen.

Zur Herstellung eines wartungsfreien Schutzsystems ist die Steuerrelaisschaltung 34 von dem fehlersicheren Automatisierungssystem 12 überprüfbar und/oder überwachbar. Hierzu ist der ausgangsseitige Abschnitt 28 der Ruhestromlinie 30 zwischen dem Ausgang des jeweiligen Auslösespeicher 48 und dem Eingang an der zugehörigen Laststeuereinheit 20 über eine Rückführleitung 50 mit einem Eingang 52 des Automatisierungssystems verbunden. Somit können die Signale jeder Ruhestromlinie 30, welches am Eingang der Laststeuereinheit 20 anliegen kann, vom Automatisierungssystem 12 zur Überprüfung bzw. zur Überwachung weiter verarbeitet werden. Der Status jeder Ruhestromlinie 30 ist somit jederzeit im Automatisierungssystem 12 verfügbar und kann von diesem dem Bediener der Anlage angezeigt werden.

Alternativ oder zusätzlich kann vorgesehen sein, das über die Auslöselinie 22, 24 dem Stellglied 26 zuführbare Signal dem Automatisierungssystem 12 jeweils über eine weitere Rückführleitung 54 zurückzuführen. Hierdurch kann das Automatisierungssystem die Funktionsfähigkeit der Laststeuereinheiten 20 überprüfen und das Ergebnis der Überprüfung dem Bediener der Anlage anzeigen.

Ferner kann vorgesehen sein, die Steuerrelaisschaltung 34 dergestalt zu erweitern, dass vom Automatisierungssystem 12 dedizierte Signale, so genannte Prüfsignale, jeder der Ruhestromlinien 30a, 30b, 30c, 30d getrennt zuführbar sind, um diese "spannungsfrei" bzw. "stromfrei" zu schalten. Hierzu ist jedes Längsrelais 46 des Blockschutz-Schutzkreises 51 über eine separate Prüfleitung 56 mit einem Ausgang 42 des Automatisierungssystems 12 verbunden. Auch für fehlersichere Schutzkriterien sind Längsrelais 47 in der Steuerrelaisschaltung 34 vorgesehen, deren Erregereingänge 38 mit den Signalausgängen 42 des Automatisierungssystems 12 verbunden sind.

Aufgrund der vorgenannten Verschaltung des Schutzsystems 10 ist dieses mittels einer geeigneten Programmierung des fehlerfreien Automatisierungssystems 12 in der Lage, jede Laststeuereinheit 20a, 20b oder/und jede Ruhestromlinie 30a, 30b, 30c, 30d einzeln und zeitlich nacheinander auf fehlerfreie Funktion zu prüfen.

Die beiden Programme der Automatisierungssysteme 12, 14 umfassen mehrere logische Module, welche die einzelnen Aufgaben der Signalverarbeitung und Durchleitung von den Signalen der Betriebsparameter übernehmen. Das erste Modul 55 bearbeitet die Signale für fehlersichere Schutzkriterien, das zweite Modul 57 die Signale für nicht fehlersichere Schutzkriterien und das dritte Modul 58 die Signale für den allgemeinen Start-Befehl der Anlage "Ventil Öffnen".

Zur Durchführung der Prüfung bzw. Überwachung der Ruhestromlinien sind weitere Module in dem Programm des Automatisierungssystems 12 vorgehen: Ein viertes Modul 63 dient für den Test der Linien-Auslösung, ein fünftes Modul 65 für das automatische Rücksetzsignal der Auslösespeicher 48, ein sechstes Modul 67 für die Linien-Status-Überwachung und ein weiteres Modul 69 für die Prüfsignalüberwachung der Auslöselinien. Die Module 63, 65 67 69 arbeiten dabei zusammen und sind in der Lage, die zur Prüfung bzw. Überwachung der Linien 22, 24, 30, notwendigen Signale auszugeben und zu empfangen.

Um die Steuerrelaisschaltung 34 des Schutzsystems 10 auf Funktionsfähigkeit bzw. auf Fehlerfreiheit zu überprüfen, führt das Automatisierungssystem 12 programmgemäß die nachfolgend beschriebenen Schritte für jede seiner Ruhestromlinien 30a, 30b, 30c, 30d einzeln und nacheinander durch. Aufgrund der Rückführung der in den Ruhestromlinien 30 auftretenden Signale in das Automatisierungssystem 12 kann dieses prüfen, ob auf einer der Ruhestromlinien 30a, 30b, 30c oder 30d ein Defekt vorliegt.

Sofern eine Überprüfung während des Betriebs der Gasturbinenanlage durchgeführt werden soll, muss sichergestellt sein, dass das Stellglied 26 mit der Versorgungsspannung über diejenige der Laststeuereinheiten 20a (oder 20b) des Paares verbunden ist, welche nicht der zu überprüfenden Ruhestromlinien 30c, 30d (oder 30a, 30b) nachgeschaltet ist. Andernfalls würde die Prüfung zu einer ungeplanten Abschaltung der Gasturbinenanlage führen.

Das in dem Automatisierungssystem in maschinenlesbarer Form gespeicherte und von diesem durchführbare Prüfverfahren wird exemplarisch anhand der Überprüfung der Ruhestromlinie 30c geschildert:
Als Freigabebedingung ist zuerst festzustellen, dass die Versorgung des Stellgliedes 26 mit elektrischer Spannung durch diejenige Laststeuereinheit 20a des Paares erfolgt bzw. erfolgen kann, welche der zu überprüfenden Ruhestromlinie 30c nicht nachgeordnet ist. Weiterhin ist festzustellen, dass die in das Automatisierungssystem 12 zurück gelesenen Zustände der Auslöselinien 22 und 24 identisch sind und keine Störungen der Laststeuereinheiten 20a und 20b vorliegen. Sofern diese Freigabebedingungen erfüllt sind, wird vom Automatisierungssystem die zu überprüfende Ruhestromlinie 30c durch Öffnen des Schaltelements 40 eines der zugeordneten Steuerrelais 36 ausgangsseitig spannungsfrei geschaltet. Hierbei wird nacheinander das der Einspeisung der Ruhestromlinie 30c am nächsten gelegene Längsrelais 46 und nach erfolgreichem Rücksetzen des Auslösespeichers 48 das Längsrelais 47 zur Einbindung der fehlersicheren Schutzkriterien aus dem Automatisierungssystem 12 entsprechend betätigt. Das Signal "spannungsfrei" wird vom Auslösespeicher 48 empfangen und "zwischengespeichert", wodurch der ausgangsseitige Teil 28 der Ruhestromlinie 30 die "Spannungsfreiheit" an die Laststeuereinheit 20b "überträgt". Durch die fehlende Spannung an einem der Eingänge wird die zugehörige Laststeuereinheit 20b inaktiv geschaltet, wonach die nachgeschaltete Auslöselinie 24 das Stellglied 26 von der Versorgungsspannung trennt. Da aber aufgrund der intakten Ruhestromlinien 30a, 30b der anderen Laststeuereinheit 20a des Paares das Stellglied 26 mit Spannung versorgt wird, bleibt die Gasturbinenanlage trotz dieser "online"-Überprüfung der Ruhestromlinie 30c weiter in Betrieb.

Durch die Rückführung der Signale der Ruhestromlinie 30 und durch die Rückführung der Signale der Auslöselinie 24 kann das Automatisierungssystem 12 ermitteln, welche Signallaufzeit zwischen der Generierung des Prüfsignals durch Öffnen des Schaltelements 40 einer der Steuerrelais 36 und dem Empfang des nachgeordneten Signals an der Ruhestromlinie 30c bzw. der Auslöselinie 24 vergangen ist. In der Regel ist ein Prüfsignal für die Dauer von bis zu einer Sekunde vorgesehen und wird durch die Ansteuerung einer der Längsrelais 46 vom Automatisierungssystem 12 erzeugt. Empfängt das Automatisierungssystem 12 nach dem Start des Prüfsignals an einem seiner Signaleingänge 52 nicht innerhalb von 0,5 Sekunden, vorzugsweise nicht innerhalb von 0,3 Sekunden die erwartete Reaktion am Ausgang 28 der Ruhestromlinie 30c (oder an der Auslöselinie 24), so wird dies als Fehler eingestuft. Dies wird dem Betreiber der Anlage über eine nicht dargestellte Anzeige als Fehlermeldung mitgeteilt. In diesem Fall ist die Ruhestromlinie 30c bzw. die Komponenten der Steuerrelaisschaltung 34, welche in der Ruhestromlinie 30c liegen, auf Potenzialschluss zu überprüfen. Dabei ist auch jedes der Steuerrelais 36 sowohl erregerseitig als auch schaltelementseitig zu überprüfen. Außerdem werden in diesem Fall entsprechende Fehlermeldungen erzeugt und gespeichert, die erst durch eine manuelle Betätigung rücksetzbar sind. Der Auslösespeicher 48 wird unabhängig vom Erkennen eines Fehlers automatisch durch das Automatisierungssystem 12 zurückgesetzt, es sei denn, dass eine vorschriftsmäßige Auslösung der Steuerrelaisschaltung 34 ansteht. Letzteres wird dadurch erkannt, dass eine von einem der Schutzkreise 45, 49 erkannte Störung zu einer Unterbrechung einer der Ruhestromlinien 30a oder 30b führt, welche zu der zu überprüfenden Ruhestromlinie 30c in Verfügbarkeitsredundanz stehen. Folglich steuert das betreffende Auslöseerkennungsrelais 64a nicht das Rücksetzfreigaberelais 62c an, wodurch dieses mit seinem dann offenen Schließerkontakt den Rücksetzbefehl über die entsprechende Leitung 60 vom Signalausgang des Automatisierungssystem 12 für den Auslösespeicher 48 der Ruhestromlinie 30c blockiert. Zum Rücksetzen des Auslösespeichers 48 ist dann ein manuelles Rücksetzsignal von einem Modul 71 an dieses weiterzuleiten.

Wird das Prüfsignal innerhalb der vorgegebenen Maximaldauer von 0,5 Sekunden bzw. 0,3 Sekunden von dem Automatisierungssystem 12 eingangsseitig erfasst, so wurde die Ruhestromlinie 30c erfolgreich geprüft, ohne dass ein Fehler entdeckt wurde. Bezüglich der selbsttätigen Quittierung des in der Ruhestromlinie 30c mit dem jeweiligen Auslösespeicher 48 gespeicherten Signals über die entsprechende Leitung 60 vom Signalausgang des Automatisierungssystem 12 gelten in diesem Fall die selben Bedingungen wie im Absatz zuvor aufgeführt. Sofern nach der gestaffelten Auslöseanregung über die Längsrelais 46 und 47 nun weiterhin die Freigabebedingungen bezüglich des Stellgliedes 26, der Auslöselinien 22 und 24 sowie der Laststeuereinheiten 20a und 20b vorliegen, kann im Anschluss die nächste Ruhestromlinie 30d geprüft werden.
Vorzugsweise wird das Prüfverfahren während des Betriebs der Anlage aber besonders vorzugsweise während der Anfahrphase oder während der Abfahrphase der Anlage durchgeführt, um die Verfügbarkeit der Anlage nicht weiter zu gefährden.

Insgesamt wird mit der Erfindung ein Schutzsystem 10 für eine Anlage vorgeschlagen, bei der alle fehlersicheren und Schutzkreise 49 mit Reaktionszeitanforderungen größer als fünfzig Millisekunden über ein fehlersichereres speicherprogrammierbares Automatisierungssystem 12 geführt werden. Nicht fehlersichere Schutzkreise 61 mit Reaktionszeitanforderungen größer als fünfzig Millisekunden können von dem nicht fehlersichereren speicherprogrammierbaren Automatisierungssystem 14 bearbeitet werden. Für alle anderen Schutzkreise 45 mit Reaktionszeitanforderungen kleiner als fünfzig Millisekunden wird anstelle dessen eine Verschaltung von fehlersicheren Steuerrelais 36 in einer einfehlertoleranten Konfiguration vorgesehen, wobei das Automatisierungssystem 12 die Funktion der Steuerrelaisschaltung 34, vorzugsweise während des Betriebes der Anlage zyklisch überprüfen oder auch stetig überwachen kann.

## Patentansprüche

1. Schutzsystem (10) für eine Anlage,
mit mindestens einem Automatisierungssystem (12, 14),
das mehrere Signaleingänge, welche zum Empfangen von zu überwachenden Betriebssignalen von ersten Betriebsparametern der Anlage vorgesehen sind, und
mehrere Signalausgänge (42), welche teilweise zum mittelbaren Steuern der Anlage vorgesehen sind,
aufweist sowie
mit mindestens einer Laststeuereinheit (20), welche eingangsseitig mit den Signalausgängen (42) gekoppelt ist und ausgangsseitig über eine Auslöselinie (22, 24) mit einem Stellglied (26) verbunden ist,
**dadurch gekennzeichnet, dass**
eine Steuerrelaisschaltung (34) mit mindestens einem Steuerrelais (36) vorgesehen ist, über die Betriebssignale weiterer Betriebsparameter zur Laststeuereinheit (20) führbar sind und
wobei die Steuerrelaisschaltung (34) von dem Automatisierungssystem (12) überprüfbar ist.

2. Schutzsystem (10) nach Anspruch 1,
bei dem die ersten Betriebsparameter minder zeitkritische Schutzkriterien der Anlage sind und bei dem die weiteren Betriebsparameter stark zeitkritische Schutzkriterien der Anlage sind.

3. Schutzsystem (10) nach Anspruch 1 oder 2,
bei der die Kopplung zwischen Signalausgängen (42) und der Laststeuereinheit (20) mittelbar über die Steuerrelaisschaltung (34) erfolgt.

4. Schutzsystem (10) nach Anspruch 1, 2 oder 3,
bei dem zur Bildung einer Verfügbarkeitsredundanz ein Paar von getrennt ansteuerbaren Laststeuereinheiten (20a, 20b) mit jeweils einer Auslöselinie (22, 24) vorgesehen ist, welche Auslöselinien (22, 24) nach Art einer ODER-Verknüpfung mit dem Stellglied (26) verknüpft sind.

5. Schutzsystem (10) nach einem der vorangehenden Ansprüche,
bei dem die Steuerrelaisschaltung (34) zumindest eine Ruhestromlinie (30) umfasst, in der Schaltelemente (40) von den Steuerrelais (36) der Steuerrelaisschaltung (34) vorgesehen sind und welche Ruhestromlinie (30) mit einem Eingang der Laststeuereinheit (20) verbunden ist.

6. Schutzsystem (10) nach einem der vorangehenden Ansprüche,
bei dem zur Bildung einer Sicherheitsredundanz jede Laststeuereinheit (20a, 20b) eines Paares eingangsseitig mit zwei getrennt geführten Ruhestromlinien (30) verbunden ist, welche nach Art einer (UND)-Verknüpfung in der jeweiligen Laststeuereinheit (20) verknüpft sind.

7. Schutzsystem (10) nach Anspruch 5 oder 6,
bei dem die Steuerrelaisschaltung (34) pro zu überwachendem Betriebssignal und pro Ruhestromlinie (30) jeweils ein Steuerrelais (36), welches jeweils einen Erregereingang (38) und mindestens einem Schaltelement (40) umfasst, aufweist, wobei der Erregereingang (38) mit dem zum jeweiligen Betriebssignal zugehörigen Signalausgang (42) des Automatisierungssystems (12) verbunden ist und
eines der Schaltelemente (40) in der Ruhestromlinie (30) vorgesehen ist.

8. Schutzsystem (10) nach einem der vorangehenden Ansprüche,
bei dem zur Signalrückführung zu dem Automatisierungssystem (12) der Ausgang (28) der betreffenden Ruhestromlinie (30) mit einem Signaleingang (52) des Automatisierungssystems (12) verbunden ist.

9. Schutzsystem (10) nach einem der vorangehenden Ansprüche,
bei dem zur Signalrückführung zu dem Automatisierungssystem (12) die betreffende Auslöselinie (22, 24) mit einem Signaleingang (52) des Automatisierungssystems (12) verbunden ist.

10. Schutzsystem (10) nach einem der Ansprüche 1 bis 9,
bei dem für jede Ruhestromlinie (30) ein Längsrelais (46) mit einem Erregereingang (38) und mindestens einem Schaltelement (40) vorgesehen ist,
dessen Schaltelement (40) mit der jeweiligen Ruhestromlinie (30) und dessen Erregereingang (38) mit einem Signalausgang (42) des Automatisierungssystems (12) verbunden ist, um ein vom Automatisierungssystem (12) vorgebbares Prüfsignal der Steuerrelaisschaltung (34) zuzuführen.

11. Schutzsystem (10) nach Anspruch 10,
bei dem das Schaltelement (40) des Längsrelais (46) unmittelbar hinter einem Einspeisepunkt innerhalb der Ruhestromlinie (30) vorgesehen ist.

12. Schutzsystem (10) nach einem der Ansprüche 1 bis 9,
bei dem für jede Ruhestromlinie (30) ein Längsrelais (47) mit einem Erregereingang (38) und mindestens einem Schaltelement (40) vorgesehen ist,
dessen Schaltelement (40) mit der jeweiligen Ruhestromlinie (30) und dessen Erregereingang (38) mit einem Signalausgang (42) des Automatisierungssystems (12) verbunden ist, um die im Automatisierungssystem (12) verarbeiteten Signale der ersten Betriebsparameter, insbesondere die fehlersicheren Schutzkriterien, der Steuerrelaisschaltung (34) zuzuführen.

13. Schutzsystem (10) nach Anspruch 10, 11 oder 12,
bei dem zum Überprüfen der Funktionstüchtigkeit des Längsrelais (46, 47) ein Prüfsignal vom Automatisierungssystem (12) diesem vorgebbar ist.

14. Schutzsystem (10) nach einem der Ansprüche 5 bis 13,
bei dem in der oder in jeder Ruhestromlinie (30) jeweils ein Auslösespeicher (48) vorgesehen ist,
welches zwischen den Schaltelementen (40) der Steuerrelais (36) der Steuerrelaisschaltung (34) und der Laststeuereinheit (20) vorgesehen ist.

15. Schutzsystem (10) nach Anspruch 14,
bei dem der Auslösespeicher (48) durch ein Rücksetzsignal des Automatisierungssystems (12) zurücksetzbar ist.

16. Schutzsystem (10) nach Anspruch 15,
bei dem zur Freigabe des Rücksetzsignals für den Auslösespeicher (48) ein Auslöseerkennungsrelais (64) und mindestens ein Rücksetzfreigaberelais (62) vorgesehen ist, wobei die Auslöseerkennungsrelais (64) und Rücksetzfreigaberelais (62) eingangsseitig mit denjenigen Ruhestromlinien (30) verbunden sind,
welche der dem betreffenden Auslösespeicher (48) nachgeschalteten Laststeuereinheit (20) nicht zugeordnet sind.

## Claims

1. Protective system (10) for an installation,
having at least one automation system (12, 14) which has a plurality of signal inputs, which are intended to receive operating signals, to be monitored, of first operating parameters of the installation, and
a plurality of signal outputs (42), some of which are intended for indirect control of the installation,
and
having at least one load control unit (20) whose input side is coupled to the signal outputs (42) and whose output side is coupled via a tripping line (22, 24) to an actuating element (26),
**characterized in that**
a control relay circuit (34) having at least one control relay (36) is provided, via which control relay circuit (34) the operating signals of further operating parameters can be passed to the load control unit (20), and
wherein the control relay circuit (34) can be checked by the automation system (12).

2. Protective system (10) according to Claim 1,
in which the first operating parameters are less time-critical protective criteria for the installation, and in which the further operating parameters are highly time-critical protective criteria for the installation.

3. Protective system (10) according to Claim 1 or 2,
in which the coupling between the signal outputs (42) and the load control unit (20) is produced indirectly via the control relay circuit (34).

4. Protective system (10) according to Claim 1, 2 or 3,
in which, in order to form availability redundancy, a pair of load control units (20a, 20b) which can be operated separately and have a respective tripping line (22, 24) are provided, and the tripping lines (22, 24) are linked to the actuating element (26) in the form of an OR logic operation.

5. Protective system (10) according to one of the preceding claims,
in which the control relay circuit (34) has at least one closed-circuit line (30) in which switching elements (40) from the control relays (36) in the control relay circuit (34) are provided, and which closed-circuit line (30) is connected to one input of the load control unit (20).

6. Protective system (10) according to one of the preceding claims,
in which, in order to form safety redundancy, the input side of each load control unit (20a, 20b) in a pair is connected to two separately routed closed-circuit lines (30) which are logically linked in the respective load control unit (20) in the form of an (AND) logic operation.

7. Protective system (10) according to Claim 5 or 6,
in which the control relay circuit (34) in each case has a control relay (36), which in each case has an exciter input (38) and at least one switching element (40), per operating signal to be monitored and per closed-circuit line (30),
with the exciter input (38) being connected to that signal output (42) of the automation system (12) which is associated with the respective operating signal, and
with one of the switching elements (40) being provided in the closed-circuit line (30).

8. Protective system (10) according to one of the preceding claims,
in which the output (28) of the relevant closed-circuit line (30) is connected to a signal input (52) of the automation system (12) for signal feedback to the automation system (12).

9. Protective system (10) according to one of the preceding claims,
in which the relevant tripping line (22, 24) is connected to a signal input (52) of the automation system (12) for signal feedback to the automation system (12).

10. Protective system (10) according to one of Claims 1 to 9, in which a series relay (46) with an exciter input (38) and at least one switching element (40) is provided for each closed-circuit line (30),
whose switching element (40) is connected to the respective closed-circuit line (30) and whose exciter input (38) is connected to a signal output (42) of the automation system (12), in order to supply a test signal, which can be predetermined by the automation system (12), to the control relay circuit (34).

11. Protective system (10) according to Claim 10,
in which the switching element (40) of the series relay (46) is provided immediately downstream from a feed point within the closed-circuit line (30).

12. Protective system (10) according to one of Claims 1 to 9, in which a series relay (47) with an exciter input (38) and at least one switching element (40) is provided for each closed-circuit line (30),
whose switching element (40) is connected to the respective closed-circuit line (30) and whose exciter input (38) is connected to a signal output (42) of the automation system (12), in order to supply those signals which have been processed in the automation system (12) of the first operating parameter, in particular the fail-safe protection criteria, to the control relay circuit (34).

13. Protective system (10) according to Claim 10, 11 or 12,
in which a test signal for the series relay (46, 47) can be predetermined by the automation system (12) in order to check the serviceability of the series relay (46, 47).

14. Protective system (10) according to one of Claims 5 to 13,
in which a tripping memory (48) is in each case provided in the or in each closed-circuit line (30),
and is provided between the switching elements (40) of the control relays (36) of the control relay circuit (34) and the load control unit (20).

15. Protective system (10) according to Claim 14,
in which the tripping memory (48) can be reset by a reset signal from the automation system (12).

16. Protective system (10) according to Claim 15,
in which a tripping identification relay (64) and at least one reset enable relay (62) are provided in order to enable the reset signal for the tripping memory (48),
with the tripping identification relay (64) and the reset enable relay (62) being connected on the input side to those closed-circuit lines (30),
which are not associated with the load control unit (20) which is connected downstream from the relevant tripping memory (48).

## Revendications

1. Système (10) de protection d'une installation,
comprenant au moins un système (12, 14) d'automatisation, qui a plusieurs entrées de signal prévues pour recevoir des signaux de fonctionnement à contrôler de premiers paramètres de fonctionnement de l'installation et
plusieurs sorties (42) de signal, prévues en partie pour commander indirectement l'installation,
ainsi que
comprenant au moins une unité (20) de commande de charge, qui est couplée, du côté de l'entrée, aux sorties (42) de signal et, du côté de la sortie, à un organe (26) de réglage par une ligne (22, 24) de déclenchement,
**caractérisé en ce que**
il est prévu un circuit (34) de relais de commande ayant au moins un relais (36) de commande, circuit par lequel les signaux de fonctionnement d'autres paramètres de fonctionnement peuvent être envoyés à l'unité (20) de commande de charge et
dans lequel le circuit (34) de relais de commande peut être contrôlé par le système (12) d'automatisation.

2. Système (10) de protection suivant la revendication 1,
dans lequel les premiers paramètres de fonctionnement sont des critères de protection de l'installation, peu critiques du point de vue du temps, et dans lequel les autres paramètres de fonctionnement sont des critères de protection de l'installation, très critiques du point de vue du temps.

3. Système (10) de protection suivant la revendication 1 ou 2,
dans lequel le couplage entre les sorties (42) de signal et l'unité (20) de commande de charge s'effectue indirectement par le circuit (34) de relais de commande.

4. Système (10) de protection suivant la revendication 1, 2 ou 3,
dans lequel, pour former une redondance de disponibilité, il est prévu une paire d'unités (20a, 20b) de commande de charge pouvant être commandées séparément et ayant chacune une ligne (22, 24) de déclenchement, lesquelles lignes (22, 24) de déclenchement sont combinées à la manière d'une combinaison OU avec l'organe (26) de réglage.

5. Système (10) de protection suivant l'une des revendications précédentes,
dans lequel le circuit (34) de relais de commande comprend au moins une ligne (30) de courant de repos, dans laquelle sont prévus des éléments (40) de commutation des relais (36) de commande du circuit (34) de relais de commande et laquelle ligne (30) de courant de repos est reliée à une entrée de l'unité (20) de commande de charge.

6. Système (10) de protection suivant l'une des revendications précédentes,
dans lequel, pour former une redondance de sécurisation, chaque unité (20a, 20b) de commande de charge d'une paire est reliée du côté de l'entrée à deux lignes (30) de courant de repos guidées séparément, qui sont combinées à la manière d'une combinaison (ET) dans l'unité (20) de commande de charge respective.

7. Système (10) de protection suivant la revendication 5 ou 6, dans lequel le circuit (34) de relais de commande a, par signal de fonctionnement à contrôler et par ligne (30) de courant de repos, respectivement, un relais (36) de commande, qui comprend, respectivement, une entrée (38) d'excitation et au moins un élément (40) de commutation, l'entrée (38) d'excitation étant reliée à la sortie (42) de signal, associée au signal de fonctionnement respectif du système (12) d'automatisation et l'un des éléments (40) de commutation étant prévu dans la ligne (30) de courant de repos.

8. Système (10) de protection suivant l'une des revendications précédentes,
dans lequel, pour retourner le signal au système (12) d'automatisation, la sortie (28) de la ligne (30) de courant de repos concernée est reliée à une entrée (52) de signal du système (12) d'automatisation.

9. Système (10) de protection suivant l'une des revendications précédentes,
dans lequel, pour retourner le signal au système (12) d'automatisation, la ligne (22, 24) de déclenchement concernée est reliée à une entrée (52) de signal du système (2) d'automatisation.

10. Système (10) de protection suivant l'une des revendications 1 à 9,
dans lequel il est prévu, pour chaque ligne (30) de courant de repos, un relais (46) long, ayant une entrée (38) d'excitation et au moins un élément (40) de commutation,
dont l'élément (40) de commutation est relié à la ligne (30) de courant de repos respective et dont l'entrée (38) d'excitation est reliée à une sortie (42) de signal du système (12) d'automatisation pour envoyer un signal de contrôle, pouvant être prescrit par le système (12) d'automatisation, du circuit (34) de relais de commande.

11. Système (10) de protection suivant la revendication 10,
dans lequel l'élément (40) de commutation du relais (46) long est prévu juste derrière un point d'injection dans la ligne (30) de courant de repos.

12. Système (10) de protection suivant l'une des revendications 1 à 9,
dans lequel il est prévu, pour chaque ligne (30) de courant de repos, un relais (47) long, ayant une entrée (38) d'excitation et au moins un élément (40) de commutation,
dont l'élément (40) de commutation est relié à la ligne (30) de courant de repos respective et dont l'entrée (38) d'excitation est reliée à une sortie (42) de signal du système (12) d'automatisation, pour envoyer au circuit (34) de relais de commande les signaux, traités dans le système (12) d'automatisation, des premiers paramètres de fonctionnement, notamment les critères de protection sécurisés vis-à-vis d'une erreur.

13. Système (10) de protection suivant la revendication 10, 11 ou 13,
dans lequel, pour contrôler le bon fonctionnement du relais (46, 47) long, un signal de contrôle peut lui être prescrit par le système (12) d'automatisation.

14. Système (10) de protection suivant l'une des revendications 5 à 13,
dans lequel, dans la ou dans chaque ligne (30) de courant de repos, est prévu un accumulateur (48) de déclenchement,
qui est prévu entre les éléments (40) de commutation du relais (36) de commande du circuit (34) de relais de commande et l'unité (20) de commande de charge.

15. Système (10) de protection suivant la revendication 14,
dans lequel l'accumulateur (48) de déclenchement peut être remis à l'état initial par un signal de remise à l'état initial du système (12) d'automatisation.

16. Système (10) de protection suivant la revendication 15,
dans lequel, pour libérer le signal de remise à l'état initial de l'accumulateur (48) déclenchement, est prévu un relais (64) de détection de déclenchement et au moins un relais (62) de libération de remise à l'état initial, le relais (64) de détection de déclenchement et le relais (62) de libération de remise à l'état initial étant reliés du côté de l'entrée aux lignes (30) de courant de repos,
qui ne sont pas associées à l'unité (20) de commande de charge montée en aval de l'accumulateur (48) de déclenchement concernée.
